# EUROPEAN PATENT SPECIFICATION

(11) **EP 1 503 916 B1**
(45) Date of publication and mention of the grant of the patent: **31.01.2007**
(21) Application number: 03722775.8
(22) Date of filing: 25.04.2003
(51) Int. Cl.: B60K 17/35, F16D 43/284

(54) **A VEHICLE FINAL DRIVE ASSEMBLY**
ENDANTRIEB FÜR EIN FAHRZEUG
ENSEMBLE BLOC D'ENTRAINEMENT D'ESSIEU DE VEHICULE

(30) Priority: 10.05.2002 GB 0210693
(43) Date of publication of application: 09.02.2005
(73) Proprietor: Ford Global Technologies, LLC, Dearborn, MI 48126 (US); Countrytrac Limited, Ashford, Kent TN23 1EW (GB)
(72) Inventor: MAY, Eric, Sittingbourne, Kent ME10 2SZ (GB)
(74) Representative: Grunfeld, David Peter
(86) International application number: PCT/GB2003/001772
(87) International publication number: WO 2003/095256

(56) References cited:
- WO-A-00/12915
- DE-A- 3 407 918
- GB-A- 2 345 041
- US-A- 4 648 492
- US-A- 4 924 989
- US-A- 5 103 690
- US-A- 5 632 185

## Description

### Field

This invention relates to a final drive assembly for a vehicle and in particular but not exclusively to vehicles having an all wheel drive facility, and to transmissions assemblies therefor.

### Background of the Invention

In the present trend towards more and more compact vehicles, vehicles having longitudinally arranged engines with front wheel drives are known to have gearboxes and drive lines arranged around the engine.

In GB-A-2345 041, the gearbox is arranged at the rear of the engine with a final drive assembly and differential unit located to one side of the engine with a drive shaft extending transversely between the wheels below the engine sump. The differential unit is driven by an input shaft located within the transmission assembly and the whole unit is in a separate casing which is secured to the gearbox housing thereby avoiding mounting the final drive assembly on the engine lower structure. However, with more and more stringent space requirements, the arrangement with the final drive unit in some applications occupies too much space on that particular side of the engine.

In US Patent 3213 958 (Muller) the gear box is arranged alongside the engine and the final drive train extends transversely through the engine sump below the crankshaft. The drive train has a split differential with a differential input unit located on one side of the engine and a differential output located on the other side of the engine. This arrangement has disadvantages in that the drive shaft passes through the engine sump and the drive may become inoperable owing to the fact that wheel spin may occur.

WO 00/12915 describes a hydraulic coupling for coupling a casing and a pair of axle half shafts of an auxiliary drive axle. A clutch extends between the casing and each of the axle half shafts. The clutch is actuable to transfer torque between the casing and each of the axle half shafts by operation of a pair of hydraulic pumps which pump hydraulic fluid in response to relative rotation between the casing and the associated axle half shaft to a pair of clutch actuators.

The present invention provides an improved vehicle final drive assembly which is particularly useful for vehicles having a primary wheel drive and a secondary wheel drive.

### Statements of Invention

According to a first aspect of the present invention there is provided a transmission assembly for a motor vehicle comprising a change speed transmission having a casing connectable to a bell housing mounted on a vehicle engine, the transmission assembly further comprising a transmission main drive shaft coupled to a primary drive axle, and a secondary drive shaft drivably coupled to a final drive assembly, the final drive assembly comprising a cross shaft connected to two wheels by respective hydraulically actuated couplings, each coupling being independently actuated upon relative rotational movement between the cross shaft and a respective wheel, characterised in that in use the cross shaft extends across a lower portion of the casing and bell housing assembly such that the two couplings are located one on each side of the bell housing.

Suitably, each coupling comprises a clutch, a hydraulic pump and hydraulic clutch actuator.

Each coupling may comprise a casing for housing the clutch, hydraulic pump and clutch actuator, the casings of each coupling being rotationally fast with the cross shaft.

Preferably, the hydraulic pump comprises an impeller coupled to the wheel and an eccentric ring gear coupled to the casing.

The clutch actuator preferably comprises a hydraulic piston which is actuated by hydraulic pressure generated by the hydraulic pump.

Each clutch suitably comprises a plurality of coaxial annular friction plates wherein alternating plates are rotationally fast with the respective cross shaft and wheel, the plates being biased into frictional engagement by hydraulic actuation.

A similar hydraulically operable coupling is described in US 5310388 which discloses details of operation of the hydraulic controls for operation of the multi-plate clutch.

The secondary drive shaft preferably includes a universal joint, more preferably a constant velocity joint. The use of a universal joint allows the drive shaft to be routed to avoid other components in the engine compartment when space is tight e.g steering racks.

The final drive assembly housing is mounted to the transmission casing.

A second aspect of the invention relates to a motor vehicle having a transmission assembly according to the first aspect of the invention.

### Description of the Drawings

The invention will be described by way of example and with reference to the accompanying drawings in which:
- Fig.1: is schematic view of a motor vehicle having a final drive assembly and transmission assembly according to the present invention,
- Fig.2: is an isometric view of a transmission assembly according to the present invention,
- Fig.3: is a sectional side view of the transmission assembly of Fig.2 showing the final drive input shaft and one hydraulic coupling,
- Fig. 4: is a sectional view taken on the line IV-IV of Fig.3,
- Fig. 5: is a schematic layout of the final drive assembly of Fig. 2 in part section, and
- Fig. 6: is a schematic layout showing the transmission speed change gears and the final drive assembly.

### Detailed Description of the Invention

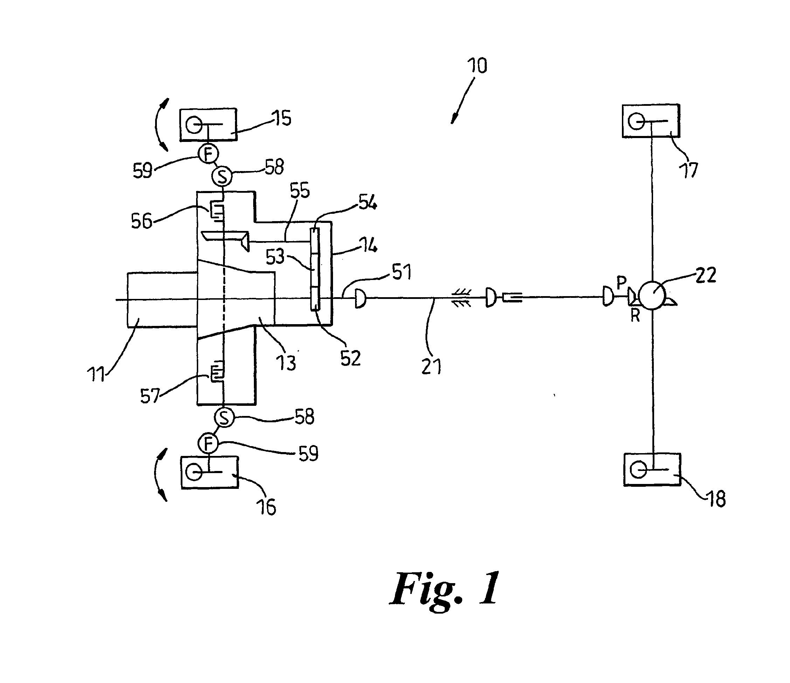

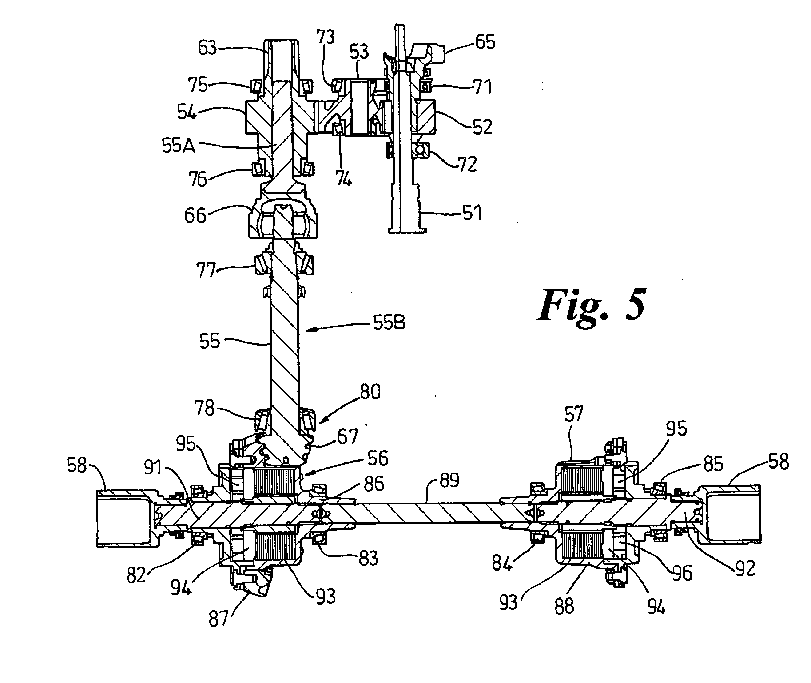

With reference to Fig. 1, there is shown a motor vehicle 10 having an engine 11 arranged longitudinally of the vehicle. A transmission assembly 13 is mounted on the rear of the engine and includes a final drive assembly 14 which drives the front wheels 15 and 16, and the rear wheels 17 and 18. The primary drive is to the rear wheels 17 & 18 which are driven by the transmission main shaft 51 (see Fig 5) via a conventional drive shaft 21 and differential unit 22 having the typical ring gear R and pinion P.

A secondary drive for the front wheel 15 & 16 is taken off the main transmission shaft 51 via gears 52,53,54 shown in detail in Fig 5. The gear 54 drives a drive shaft 55 of the final drive assembly 14. The drive shaft 55 is connected in parallel to a pair of hydraulically operated couplings 56 and 57 which are in turn connected to respective wheels 15 or 16 through constant velocity joints 58 & 59.

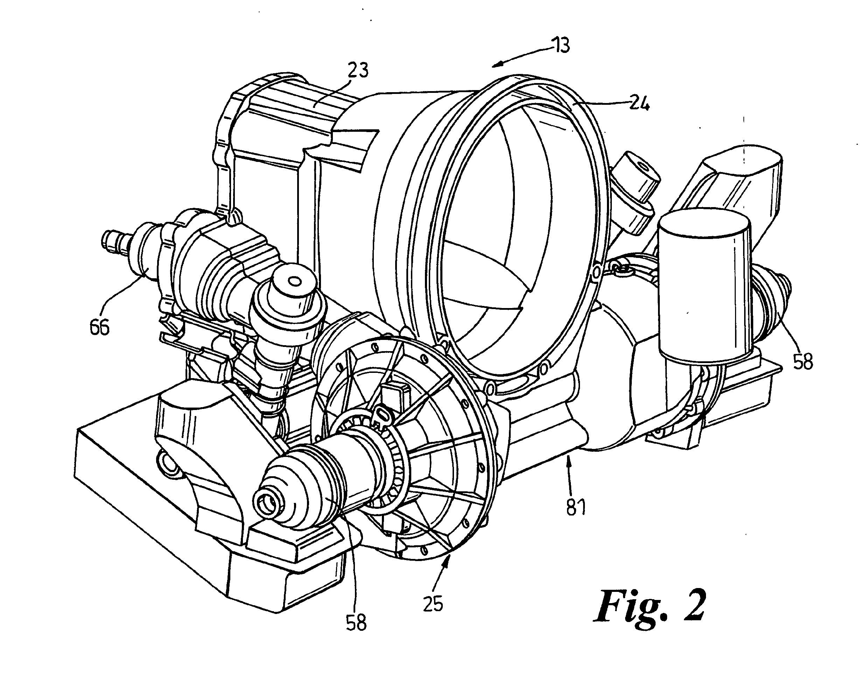

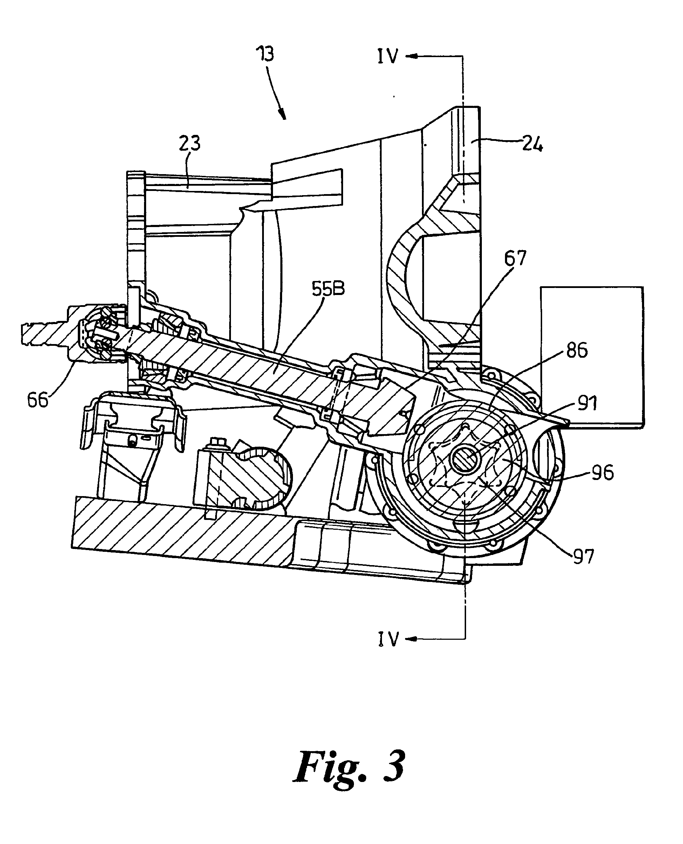

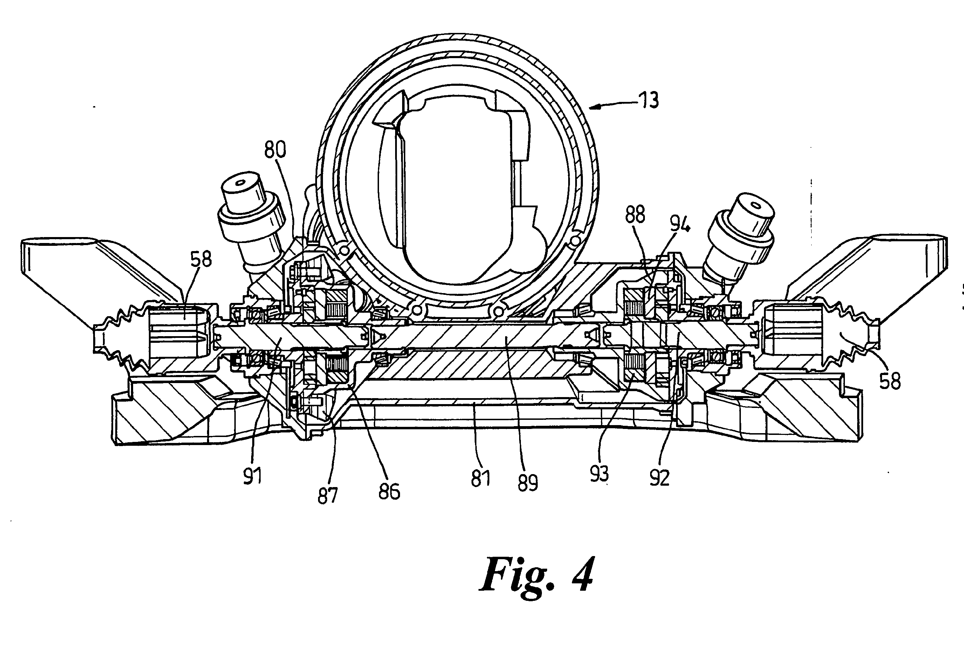

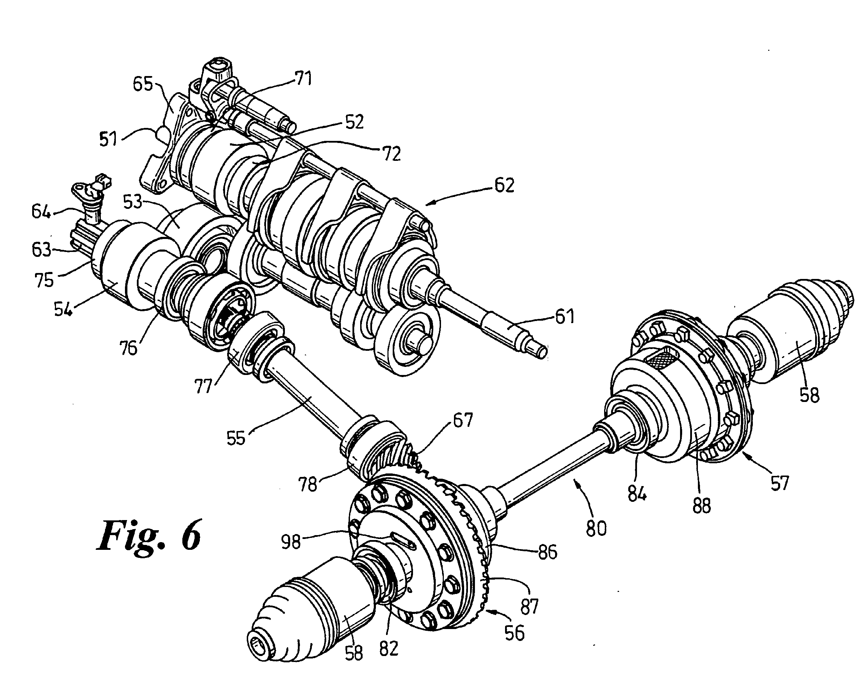

Referring also to Figs. 2-6, the transmission assembly 13 includes a gear box casing 23 which houses a plurality of change speed gears 62 having a power input shaft 61 which in use engages a drive coupling (not shown), typically a friction clutch, mounted on the rear of the engine 11 and enclosed in bell housing 24. The bell housing 24 is secured to, or formed integrally with, the gear box casing 23. The change speed gears 62 drive the transmission main drive shaft 51 extending rearwardly from the transmission assembly. The drive shaft 51 is supported for rotation in the casing 23 by bearings 71,72.

The final drive assembly 14 is substantially located in a final drive housing 25 which in turn is mounted to the gear box casing 23 and bell housing 24. The final drive assembly 14 and its housing 25 are arranged so as to have a particular shape and configuration within the vehicle engine compartment so as to avoid other components mounted on the engine or within the engine compartment.

The main drive shaft 51 has a drive flange 65 rotationally fast therewith for connection to the primary drive shaft 21 to the rear wheels. A driving gear 52 is also mounted on the main drive shaft 51 rotationally fast therewith, and meshes with an idler gear 53 which is rotatably mounted within the casing 23 by bearings 73, 74. The idler gear 53 in turn meshes with the driven gear 54 fixed to an end portion 55A of the secondary drive shaft 55 of the final drive assembly 14 to the front wheels 15 & 16.

The secondary drive shaft 55 is rotatably supported in its housing 25 to one side of casing 22 by bearings 75,76,77, and 78. The shaft 55 is split into two portions, an upper portion 55A and a lower portion 55B. The driven gear 54 is fixed to the upper portion 55A which extend substantially parallel with the transmission shaft 51 and has a short rearwardly extending portion 63 which co-operates with a speedometer drive 64 for operation of the vehicle speedometer (not shown). The upper portion 55A is connected to the lower portion 55B through a constant velocity joint 66. The lower portion 55B of the drive shaft 55 is inclined downwardly and forwardly of the constant velocity joint 66. A pinion gear 67 on the lower end of shaft 55 is drivably connected to a differential system 80.

Splitting the drive shaft 55 into two portions 55A & 55B linked via a universal joint enables the shaft and its portion of the housing 25 to be routed and shaped to avoid other components within the engine compartment.

The differential system 80 is mounted in a housing 81, forming part of the final drive housing 25, and extending across the front lower portion of the gear box casing 23 and bell housing 24. The housing 81 is suitably sealed and contains hydraulic fluid for operation of the hydraulically operated couplings 56 and 57.

The two couplings 56 & 57 are mounted for coaxial rotation in the housing on bearings 82,83,84,85. The coupling 56 has a casing 86 of hollow construction which has a bevel gear ring 87 extending around its outer surface which meshes with the pinion 67 to form the differential 80. The casing 86 is mounted in the housing 81 by the bearings 82,83 so that rotation of the shaft 55 causes the casing 86 to rotate. The casing 86 is connected to a similar casing 88 of the second hydraulic coupling 57 by a coaxial cross shaft or axle 89 so that the pinion 67 drives both casings 86 and 88 in parallel. The two couplings 56 and 57 drive respective coaxial half shafts 91,92 which are in turn connected to the wheels 15 and 16 through constant velocity joints 58.

The hydraulically operated couplings 56 and 57 are of similar construction and therefore only coupling 57 will be described in detail, the other operating in a similar manner. The casing 88 encloses a multi-plate friction clutch 93 operable in hydraulic fluid. The multi-plate clutch 93 comprises a stack of annular friction plates having alternate plates rotationally fast with the casing 88, or half shaft 92 through their outer and inner peripheries respectively. The casing 88 becomes rotationally fast with the half shaft 92, and so capable of transmitting drive between the casing 88 and half shaft 92, when the clutch 93 is compressed by a hydraulic piston 94. The piston is actuated by hydraulic pressure generated by an oil pump 95. The oil pump 95 comprises an internal ring gear 96 mounted in the, casing 88 for eccentric rotation relative to a multi-lobed impeller 97 mounted on the half shaft 92. Hydraulic fluid in the housing enters the pump via apertures 98 in the casings 86 and 88.

The hydraulic pressure generated by the pump operates the piston 94 to actuate the clutch when there is relative rotational movement between the half shafts 91, 92 and their respective casings 86, 88. A more detailed explanation of the operation of the couplings is given in US 5310388.

When a vehicle is driving normally along a highway, the primary drive is through the differential 22 and back axle. Since the front wheel half shafts 91, 92 are rotating at the same speed as the casings there is essentially no drive through the front wheels. If in a particular situation, the rear wheels slip, this will cause an increase in the speed of rotation of the transmission main drive shaft 51 and corresponding increases in the speed of rotation of the secondary drive shaft 55, cross shaft 89 and casings 86, 88. Hence, there arises a difference in rotational speed between a half shaft 91, 92 and its respective casing 86, 88. The oil pump 95 then operates to develop sufficient pressure to actuate the piston 94 and clamp the friction clutch 93, thereby transmitting drive from a casing 86 or 88 to a respective wheel. The drive is supplied to each wheel completely independently of the other wheel across the front axle.

## Claims

1. A transmission assembly for a motor vehicle comprising a change speed transmission having a casing (23) connectable to a bell housing (24) mounted on a vehicle engine (11), the transmission assembly further comprising a transmission main drive shaft (51) coupled to a primary drive axle, and a secondary drive shaft (55) drivably coupled to a final drive assembly (14), the final drive assembly (14) comprising a cross shaft (89) connected to two wheels (15, 16) by respective hydraulically actuated couplings (56, 57), each coupling (56, 57) being independently actuated upon relative rotational movement between the cross shaft (89) and a respective wheel (15, 16), **characterised in that** in use the cross shaft (89) extends across a lower portion of the casing (23) and bell housing (24) assembly such that the two couplings (56, 57) are located one on each side of the bell housing (24).

2. A transmission assembly as claimed in Claim 1, wherein each coupling (56, 57) comprises a clutch (93), a hydraulic pump (95) and hydraulic clutch actuator (94).

3. A transmission assembly as claimed in Claim 2, wherein the hydraulic pump (95) comprises an impeller (97) coupled to one of a respective wheel (15, 16) or cross shaft (89), and an eccentric ring gear (96) coupled to the other of such members.

4. A transmission assembly as claimed in Claim 3, wherein each coupling (56, 57) further comprises a casing (88) for housing the clutch (93), hydraulic pump (95) and clutch actuator (94), the casings (88) of each coupling (56, 57) being rotationally fast with the cross shaft (89).

5. A transmission assembly as claimed in Claim 4, wherein the impeller (97) is coupled to the wheel (15, 16) and the eccentric ring gear (96) is coupled to the casing (88).

6. A transmission assembly as claimed in any one of Claims 2 to 5, wherein the clutch actuator comprises a hydraulic piston (94) which is actuated by hydraulic pressure generated by the hydraulic pump (95).

7. A transmission assembly as claimed in any preceding claim, wherein each clutch (93) comprises a plurality of coaxial annular friction plates wherein alternating plates are rotationally fast with the respective cross shaft (89) and wheel (15, 16), the plates being biased into frictional engagement by hydraulic actuation.

8. A transmission assembly as claimed in any preceding claim, wherein the secondary drive shaft (55) includes a universal joint (66).

9. A transmission assembly as claimed in claim 8, wherein the universal joint comprises a constant velocity joint (66).

10. A transmission assembly as claimed in any preceding claim, wherein the final drive assembly (14) has a housing (25) mounted to the transmission casing (23).

11. A motor vehicle having a transmission assembly as claimed in any preceding claim.

## Patentansprüche

1. Kraftübertragungseinheit für ein Kraftfahrzeug, die eine Schaltkraftübertragung mit einer Ummantelung (23) umfaßt, die mit einem an einem Fahrzeugmotor (11) montierten Glockengehäuse (24) verbunden werden kann, wobei die Kraftübertragungseinheit weiterhin eine mit einer primären Antriebsachse gekoppelte Kraftübertragungshauptantriebswelle (51) und eine in antreibbarer Weise mit einer Achsantriebseinheit (14) gekoppelte sekundäre Antriebswelle (55) umfaßt, wobei die Achsantriebseinheit (14) eine Querwelle (89), die durch jeweilige hydraulisch betätigte Kupplungen (56, 57) mit zwei Rädern (15, 16) verbunden ist, umfaßt, wobei jede Kupplung (56, 57) bei relativer Drehbewegung zwischen der Querwelle (89) und einem jeweiligen Rad (15, 16) unabhängig betätigt wird, **dadurch gekennzeichnet, daß** sich die Querwelle (89) im Gebrauch über einen unteren Abschnitt der aus der Ummantelung (23) und dem Glockengehäuse (24) bestehenden Einheit erstreckt, so daß sich auf jeder Seite des Glockengehäuses (24) jeweils eine der zwei Kupplungen (56, 57) befindet.

2. Kraftübertragungseinheit nach Anspruch 1, bei der jede Kupplung (56, 57) eine Ausrückkupplung (93), eine Hydraulikpumpe (95) und einen hydraulischen Ausrückkupplungsbetätiger (94) umfaßt.

3. Kraftübertragungseinheit nach Anspruch 2, bei der die Hydraulikpumpe (95) eine mit einem eines jeweiligen Rads (15, 16) oder einer Querwelle (89) gekoppeltes Flügelrad (97) sowie ein mit dem anderen solcher Elemente gekoppeltes exzentrisches Tellerrad (96) umfaßt.

4. Kraftübertragungseinheit nach Anspruch 3, bei der jede Kupplung (56, 57) weiterhin eine Ummantelung (88) zur Unterbringung der Ausrückkupplung (93), der Hydraulikpumpe (95) und des Ausrückkupplungsbetätigers (94) umfaßt, wobei die Ummantelungen (88) einer jeden Kupplung (56, 57) mit der Querwelle (89) rotationsfest verbunden sind.

5. Kraftübertragungseinheit nach Anspruch 4, bei der das Flügelrad (97) mit dem Rad (15, 16) und das exzentrische Tellerrad (96) mit der Ummantelung (88) gekoppelt sind.

6. Kraftübertragungseinheit nach einem der Ansprüche 2 bis 5, bei der der Ausrückkupplungsbetätiger einen Hydraulikkolben (94) umfaßt, der durch von der Hydraulikpumpe (95) erzeugten Hydraulikdruck betätigt wird.

7. Kraftübertragungseinheit nach einem der vorstehend aufgeführten Ansprüche, bei der jede Ausrückkupplung (93) mehrere koaxiale ringförmige Reibscheiben umfaßt, wobei Scheiben abwechselnd mit der jeweiligen Querwelle (89) und dem jeweiligen Rad (15, 16) rotationsfest verbunden sind, wobei die Scheiben vorgespannt sind, um einen Reibeingriff durch hydraulische Betätigung zu ermöglichen.

8. Kraftübertragungseinheit nach einem der vorstehend aufgeführten Ansprüche, bei der die sekundäre Antriebswelle (55) ein Kardangelenk (66) beinhaltet.

9. Kraftübertragungseinheit nach Anspruch 8, bei der das Kardangelenk ein Gleichlaufgelenk (66) umfaßt.

10. Kraftübertragungseinheit nach einem der vorstehend aufgeführten Ansprüche, bei der die Achsantriebseinheit (14) ein an , der Kraftübertragungsummantelung (23) montiertes Gehäuse (25) hat.

11. Kraftfahrzeug mit einer Kraftübertragungseinheit nach einem der vorstehend aufgeführten Ansprüche.

## Revendications

1. Ensemble de transmission pour véhicule à moteur comportant une transmission à changement de vitesse dotée d'un carter (23) pouvant être relié à un boîtier en cloche (24) monté sur un moteur de véhicule (11), l'ensemble de transmission comportant en outre un arbre d'entraînement principal de transmission (51) couplé à un axe primaire d'entraînement et un arbre d'entraînement secondaire (55) couplé à un ensemble d'entraînement d'essieu (14) de façon à pouvoir être entraîné, l'ensemble d'entraînement d'essieu (14) comportant un arbre transversal (89) relié à deux roues (15, 16) par des accouplements respectifs (56, 57) actionnés hydrauliquement, chaque accouplement (56, 57) étant actionné indépendamment suite à un mouvement relatif de rotation entre l'arbre transversal (89) et une roue correspondante (15, 16), **caractérisé en ce que**, pendant l'utilisation, l'arbre transversal (89) s'étend en travers d'une portion inférieure de l'ensemble carter (23) - boîtier en cloche (24) de telle sorte que les deux accouplements (56, 57) soient situés chacun d'un côté du boîtier en cloche (24).

2. Ensemble de transmission selon la revendication 1, chaque accouplement (56, 57) comportant un embrayage (93), une pompe hydraulique (95) et un actionneur hydraulique d'embrayage (94).

3. Ensemble de transmission selon la revendication 2, la pompe hydraulique (95) comportant un rouet (97) couplé soit à une roue (15, 16) correspondante, soit à l'arbre transversal (89), et un engrenage à bague excentrique (96) couplé à l'autre de ces organes.

4. Ensemble de transmission selon la revendication 3, chaque accouplement (56, 57) comportant en outre un carter (88) destiné à loger l'embrayage (93), la pompe hydraulique (95) et l'actionneur d'embrayage (94), les carters (88) de chaque accouplement (56, 57) étant solidaires en rotation de l'arbre transversal (89).

5. Ensemble de transmission selon la revendication 4, le rouet (97) étant couplé à la roue (15, 16) et l'engrenage à bague excentrique (96) étant couplé au carter (88).

6. Ensemble de transmission selon l'une quelconque des revendications 2 à 5, l'actionneur d'embrayage comportant un piston hydraulique (94) actionné par une pression hydraulique générée par la pompe hydraulique (95).

7. Ensemble de transmission selon l'une quelconque des revendications précédentes, chaque embrayage (93) comportant une pluralité de plaques de frottement annulaires coaxiales, les plaques alternées étant respectivement solidaires en rotation de l'arbre transversal (89) et de la roue (15, 16), les plaques étant sollicitées par actionnement hydraulique pour entrer en interaction de frottement.

8. Ensemble de transmission selon l'une quelconque des revendications précédentes, l'arbre d'entraînement secondaire (55) comprenant un joint universel (66).

9. Ensemble de transmission selon la revendication 8, le joint universel comportant un joint homocinétique (66).

10. Ensemble de transmission selon l'une quelconque des revendications précédentes, l'ensemble d'entraînement d'essieu (14) étant doté d'un boîtier (25) monté sur le carter (23) de transmission.

11. Véhicule à moteur muni d'un ensemble de transmission selon l'une quelconque des revendications précédentes.
